# FASCICULE DE BREVET EUROPEEN

(11) **EP 1 689 598 B1**
(45) Date de publication et mention de la délivrance du brevet: **24.04.2013**
(21) Numéro de dépôt: 04805338.3
(22) Date de dépôt: 28.10.2004
(51) Int. Cl.: B60B 33/04, B60G 21/05

(54) **ESSIEU SOUPLE DONT LA RAIDEUR TRANSVERSALE EST AUGMENTEE A L'AIDE D'AU MOINS UNE PIECE FORMANT COUPELLE DE RESSORT, COUPELLE DE RESSORT ET VEHICULE CORRESPONDANT**
FLEXIBLE ACHSE MIT EINER QUERSTEIFIGKEIT, DIE MIT HILFE VON MINDESTENS EINEM FEDERTELLERFORMTEIL ERHÖHT WIRD, FEDERTELLER UND ENTSPRECHENDES FAHRZEUG
FLEXIBLE AXLE HAVING A TRANSVERSE STIFFNESS WHICH IS INCREASED WITH THE AID OF AT LEAST ONE SPRING-CUP-FORMING PART, SPRING CUP AND CORRESPONDING VEHICLE

(30) Priorité: 29.10.2003 FR 0312645
(43) Date de publication de la demande: 16.08.2006
(73) Titulaire: Auto Chassis International SNC, 72086 Le Mans Cédex 9 (FR); TOYOTA JIDOSHA KABUSHIKI KAISHA, Toyota-shi, Aichi-ken, 471-8571 (JP); Peugeot Citroën Automobiles, 78140 Velizy Villacoublay (FR)
(72) Inventeur: FERET, Olivier, F-72400 Cherreau (FR); VENEAU, Jean, F-72370 Ardenay sur Merize (FR); THIREL, Jean-Marc, F-78700 Conflans Ste Honorine (FR)
(74) Mandataire: Larcher, Dominique
(86) Numéro de dépôt international: PCT/FR2004/002784
(87) Numéro de publication internationale: WO 2005/042274

(56) Documents cités:
- DE-A- 19 605 283
- FR-A- 2 487 262
- FR-A- 2 793 736
- FR-A- 2 819 754
- GB-A- 2 124 984

## Description

Le domaine de l'invention est celui des véhicules automobiles. Plus précisément, l'invention concerne les essieux souples pour les véhicules automobiles.

On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Les bras longitudinaux sont généralement associés à différents organes fonctionnels tels que notamment :
- les douilles d'accouplement de l'essieu au châssis du véhicule, permettant le montage à pivotement des bras longitudinaux par rapport au châssis ;
- des moyens supportant une extrémité des ressorts de suspension, ces moyens supports étant désignés par le terme de coupelle de ressort ;
- des moyens de coopération avec des amortisseurs.

Au cours de la conception d'un essieu, deux grandeurs sont, entre autres, considérées pour apprécier la qualité de l'essieu : la flexion et la torsion.

Le concept, désormais répandu, des essieux souples consiste à concilier une forte raideur en flexion et une relative souplesse en torsion. En général, c'est par la géométrie de la section de la traverse, via ses inerties de flexion et de torsion, qu'est obtenu le compromis souhaité entre raideur en flexion et souplesse (relative) de torsion.

Les sections choisies pour réaliser des traverses en acier (ou autre matériau isotrope) ont souvent des formes de « V », de « U », de « L », car ces types de géométrie présentent un rapport intéressant entre inertie de flexion et inertie de torsion.

Concernant le montage des coupelles de ressort de suspension, plusieurs types de montage ont été proposés par l'art antérieur.

Dans la description qui va être faite par la suite, on entend par coupelle de ressort une pièce présentant une surface destinée à supporter la base d'un ressort de suspension, cette surface incluant des moyens de positionnement et/ou de maintien en position du ressort. De tels moyens sont le plus souvent constitués par un téton de centrage.

Dans de nombreux cas, les coupelles sont montées sur l'essieu de façon à être supportées uniquement par les bras longitudinaux, en étant soudées sur ceux-ci au voisinage du support de montage de roue.

La conception des coupelles est alors prévue pour que le montage résiste à la charge transmise par le ressort de suspension, la coupelle étant en quelque sorte suspendue au bras d'essieu et couplée à celui-ci par deux sortes de contreforts latéraux. Ces coupelles doivent donc être particulièrement résistantes.

En outre, la rigidité transversale de ces essieux est relativement limitée, sauf à prévoir des moyens de rigidification spécifiques, qui nécessitent alors des opérations de fabrication et de montage supplémentaires.

Ceci augmente bien entendu le coût de l'essieu.

Dans d'autres cas, les coupelles ont été montées dans chaque angle formé par la traverse et les bras longitudinaux (du côté des bras portant les supports de roues).

Selon cette technique, chaque coupelle présente une structure exclusivement prévue pour supporter un ressort de suspension. En d'autres termes, ces coupelles ne sont nullement conçues pour exercer une fonction de rigidification de l'essieu.

En outre, lorsque les coupelles sont ainsi positionnées sur l'essieu, il n'est plus possible, ou quasiment, de rapporter des moyens de rigidifiation au niveau de l'angle entre la traverse et chacun des bras longitudinaux.

Le document FR 2 793 736 PEUGEOT CITROEN décrit un essieu arrière à traverse déformable, dans lequel un ressort et un amortisseur, généralement montés de façon concentrique sont séparés. L'extrémité arrière du bras est fixée à un support qui supporte l'amortisseur. La traverse déformable présente deux extrémités évasées, soudées chacune à un bras, et un gousset reliant l'extrémité d'un bras. Ce gousset présente un relief de centrage sur lequel vient prendre appui la partie inférieure d'un ressort.

Par conséquent, l'essieu obtenu selon cette technique présente des performances relativement limitées, en particulier en ce qui concerne sa raideur transversale (résistance en flexion).

Bien entendu, il serait possible d'améliorer la rigidité d'un tel essieu, notamment en utilisant un matériau intrinsèquement plus résistant ou en augmentant l'épaisseur de la section de la traverse.

Toutefois, cela entraînerait un surcoût qui n'est évidemment pas souhaitable.

De plus, ce gain de raideur en flexion serait obtenu au détriment des caractéristiques de l'essieu en torsion.

L'invention a notamment pour objectif de pallier les inconvénients de l'art antérieur.

Plus précisément, l'invention a pour objectif de proposer un essieu souple dans lequel la conception de la coupelle permet d'envisager une simplification du montage de l'essieu, sans pour autant que cette simplification se traduise par une limitation des performances (en torsion, en flexion, en résistance mécanique...) de l'essieu

En ce sens, l'invention a en particulier pour objectif d'améliorer la raideur transversale de l'essieu, tout en conservant, ou quasiment, ses caractéristiques en torsion.

L'invention a également pour objectif de fournir un tel essieu dans lequel la conception et le montage de la coupelle contribuent à la bonne tenue des soudures entre la traverse et les bras longitudinaux.

L'invention a aussi pour objectif de fournir un tel essieu qui permette d'envisager des réductions de son coût de fabrication.

Un autre objectif de l'invention est de fournir un tel essieu qui soit simple de conception et facile à mettre en oeuvre.

Ces objectifs, ainsi que d'autres qui apparaîtront par la suite, sont atteints grâce à l'invention qui a pour objet un essieu souple pour véhicule automobile comprenant une traverse reliant deux bras longitudinaux chacun solidaire d'au moins une pièce, dite coupelle, présentant des moyens de positionnement et/ou de maintien d'au moins un ressort de suspension, caractérisé en ce que ladite traverse est reliée à chaque bras longitudinal par au moins une coupelle incluant des moyens de rigidification destinés à augmenter la raideur transversale dudit essieu.

Grâce à la conception et au montage de la coupelle selon l'invention, celle-ci exerce une double fonction :
- une première fonction, classique, consistant à supporter la charge verticale correspondant à la masse du véhicule et transmise par le ressort de suspension ;
- une deuxième fonction, consistant à rigidifier l'essieu, ceci à l'aide de moyens spécifiquement prévus à cet effet.

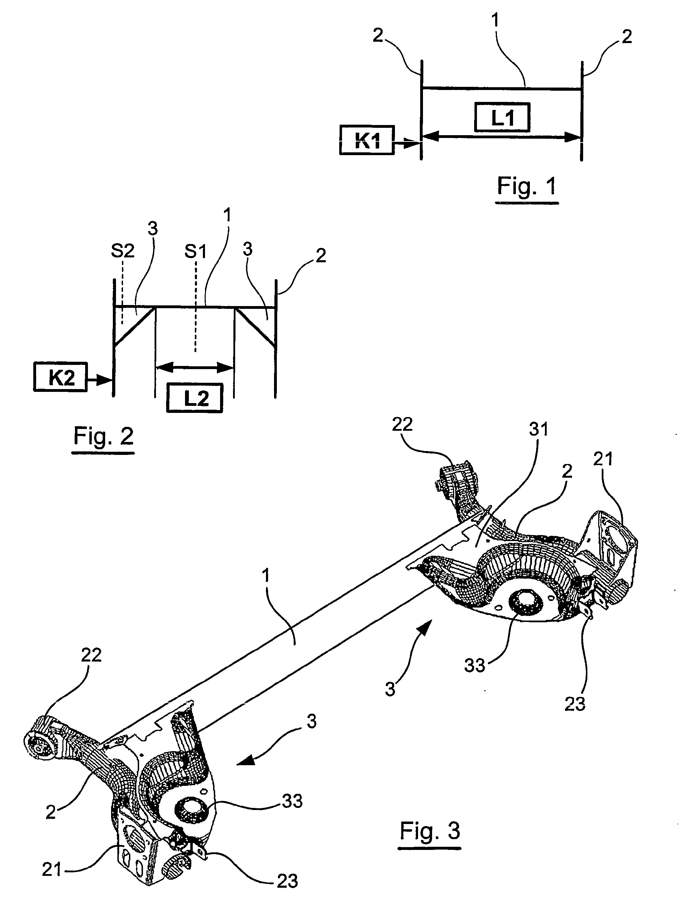

Cette deuxième fonction est explicitée plus en détail en référence aux figures 1 et 2.

Sur la figure 1, on a représenté schématiquement un essieu souple selon l'art antérieur, comprenant une traverse 1 reliant deux bras longitudinaux 2. Ainsi constituée, la traverse de l'essieu est susceptible de fléchir sur une longueur L1, et confère, pour une section et un matériau déterminés, une raideur transversale K1 à l'essieu.

En référence à la figure 2, l'essieu comprend une traverse 1 notamment reliée à chaque bras longitudinal 2 par une coupelle 3 incluant des moyens de rigidification selon l'invention.

Ainsi, la traverse de l'essieu est désormais susceptible de fléchir sur une longueur L2 inférieure à la longueur L1 de la figure 1.

Par conséquent, avec une section et un matériau identiques à la figure 1, on obtient cette fois une raideur transversale K2 de l'essieu supérieure à la raideur K1 de la figure 1, la flexion étant limitée à la longueur L2 de la traverse.

Par ailleurs, la coupelle conçue et montée selon l'invention permet de lisser la variation de raideur en torsion de la traverse, entre la section S1 (généralement ouverte dans le cas des essieux souples) et la section S2 de la traverse encastrée dans le bras. Ceci contribue à la résistance des soudures (réalisées sous forme de cordons) réalisées directement au niveau de l'encastrement de la traverse dans les bras.

En outre, l'essieu selon l'invention est réalisé avec un nombre de pièces limité par rapport aux essieux de l'art antérieur présentant une raideur transversale du même ordre. En effet, les coupelles rigidifient la liaison entre la traverse et les bras longitudinaux et il n'est donc pas nécessaire de prévoir de moyens de rigidification en plus des coupelles.

Les gammes de fabrication de l'essieu selon l'invention sont donc relativement simplifiées, et les temps de montage correspondants sont réduits.

Des gains peuvent donc être envisagés concernant le coût de fabrication d'un essieu selon l'invention.

Préférentiellement, lesdits moyens de rigidification comprennent au moins une portion essentiellement plane reliant ladite traverse et l'un desdits bras longitudinaux.

On obtient ainsi un moyen simple et efficace permettant d'exercer la fonction de rigidification, de tels moyens pouvant être aisément associés, voire inclus dans la coupelle.

Avantageusement, ladite ou lesdites portions s'inscrivent essentiellement dans le plan défini par ladite traverse et lesdits bras ou dans un plan parallèle à celui-ci.

De cette façon, la portion de rigidification est positionnée de façon optimisée pour augmenter la raideur transversale de l'essieu. En effet, le plan de la portion de rigidification est alors un plan sensiblement parallèle à celui dans lequel s'inscrivent les sollicitations s'exerçant sur les supports de roues (selon l'axe des roues).

Selon un mode de réalisation préféré, chacune desdites coupelles présente une surface support destinée à supporter un ressort de suspension, ladite surface support étant distincte desdits moyens de rigidification et reliée à celle-ci par un rebord de jonction.

Dans ce cas, ladite surface support et ledit rebord forment avantageusement un creux destiné à recevoir une extrémité dudit ressort de suspension.

On contribue ainsi au bon positionnement et au maintien du ressort de suspension sur l'essieu.

Selon une solution préférée, lesdits moyens de rigidification sont constitués par une surface plane délimitée notamment par une portion de ladite traverse, par une portion d'un des bras longitudinaux et par ledit rebord de jonction.

De cette façon, on utilise, pour la mise en oeuvre des moyens de rigidification, tout l'espace disponible (ou quasiment) dans chaque angle de l'essieu, entre la traverse, le bras longitudinal correspondant et la surface support du ressort de suspension.

Les sollicitations en flexion susceptibles d'agir sur la traverse sont ainsi dissipées sur toute la surface plane définie tel que précédemment.

Avantageusement, ladite pièce formant coupelle présente, au moins de son côté placé en regard de ladite traverse, une zone de soudage dans le plan de ladite portion de rigidification, portant un cordon de soudure continu solidarisant ladite pièce à ladite traverse.

La coupelle est ainsi de conception simple et est peu coûteuse à fabriquer. De plus, la soudure de la coupelle à la traverse est réalisée en une seule opération.

Selon une solution avantageuse, ladite pièce formant coupelle présente de son côté placé en regard d'un bras longitudinal, au moins une patte dont le bord libre s'étend sensiblement parallèlement audit bras longitudinal et portant un cordon de soudure solidarisant ladite pièce audit bras, ladite coupelle présentant également de son côté placé en regard d'un bras longitudinal un rebord concave épousant une portion de la périphérie dudit bras, ledit rebord concave portant un cordon de soudure solidarisant ladite pièce à ladite traverse.

Les liaisons de la coupelle au bras longitudinal et à la traverse sont ainsi obtenues de façon efficace et durablement fiable, y compris dans le cas où l'essieu subit de fortes sollicitations pendant l'utilisation du véhicule.

Préférentiellement, ladite pièce formant coupelle est réalisée en tôle acier.

Un tel matériau présente les qualités d'être peu cher et d'être relativement facile à travailler.

Dans ce cas, la coupelle est préférentiellement réalisée par emboutissage.

D'autres modes de réalisation peuvent bien entendu être envisagés, notamment en réalisant la coupelle en d'autres matériaux et/ou par moulage.

Selon une autre caractéristique, ladite patte est soudée sur la partie la plus haute de la section de chaque bras longitudinal, ou au voisinage de celle-ci.

De cette façon, on rapproche les moyens de rigidification intégrés à la coupelle du plan dans lequel s'inscrivent les efforts s'exerçant selon l'axe des roues et transmis par l'intermédiaire des supports de roues.

On note qu'une configuration idéale (mais difficilement réalisable) consisterait à prévoir les moyens de rigidification directement au niveau de l'axe des roues.

Préférentiellement, ladite zone de soudage est soudée sur la partie la plus haute de la section de ladite traverse ou au voisinage de celle-ci.

La soudure ainsi réalisée entre les coupelles et la traverse présente une tenue en fatigue satisfaisante, et à tout le moins supérieure à une liaison selon laquelle chaque coupelle serait soudée par exemple à mi-hauteur sur la traverse.

Préférentiellement, ladite portion plane s'étend le long dudit bras longitudinal jusqu'au support de roue ou au voisinage de celui-ci.

Ainsi, placés par rapport à l'axe des roues, les moyens de rigidification offrent une bonne capacité à reprendre et à dissiper les sollicitations transmises par les supports de roues.

Selon une autre caractéristique avantageuse, lesdits moyens de positionnement et/ou de maintien de chacune desdites coupelles comprennent un téton de centrage réalisé dans la surface support destinée à supporter ledit ressort de suspension, ledit téton de centrage étant réalisé par emboutissage.

L'invention concerne également une coupelle présentant des moyens de positionnement et/ou de maintien d'au moins un ressort de suspension, destinée à équiper un essieu souple de véhicule automobile, caractérisée en ce qu'elle est prévue pour relier la traverse à un bras longitudinal de l'essieu, ladite coupelle incluant des moyens de rigidification destinés à augmenter la raideur transversale dudit essieu.

L'invention concerne aussi un véhicule automobile équipé d'au moins un essieu comprenant une traverse reliant deux bras longitudinaux chacun solidaire d'au moins une pièce, dite coupelle, présentant des moyens de positionnement et/ou de maintien d'au moins un ressort de suspension, caractérisé en ce que ladite traverse est reliée à chaque bras longitudinal par au moins une coupelle incluant des moyens de rigidification destinés à augmenter la raideur transversale dudit essieu.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'un essieu souple selon l'art antérieur ;
- la figure 2 est une représentation schématique d'un essieu souple selon l'invention ;
- la figure 3 est une vue en perspective d'un essieu selon l'invention ;
- la figure 4 est une vue en perspective d'une coupelle destinée à équiper un essieu selon l'invention.

Tel que déjà mentionné, le principe de l'invention consiste à relier la traverse avec chacun des bras longitudinaux à l'aide d'une coupelle prévue pour augmenter la raideur transversale de l'essieu.

En référence à la figure 3, un tel essieu souple comprend une traverse 1 reliant deux bras longitudinaux 2 portant chacun :
- une plaque support de roue 21 ;
- une douille 22, par l'intermédiaire de laquelle l'essieu est accouplé au châssis du véhicule ;
- des moyens de coopération 23 avec un amortisseur.

Selon le présent mode de réalisation de l'invention, les coupelles 3 sont montées dans les angles formés par la traverse 1 et les bras longitudinaux 2, chacune des coupelles présentant une surface plane 31 formant moyen de rigidification destiné à augmenter la raideur transversale de l'essieu.

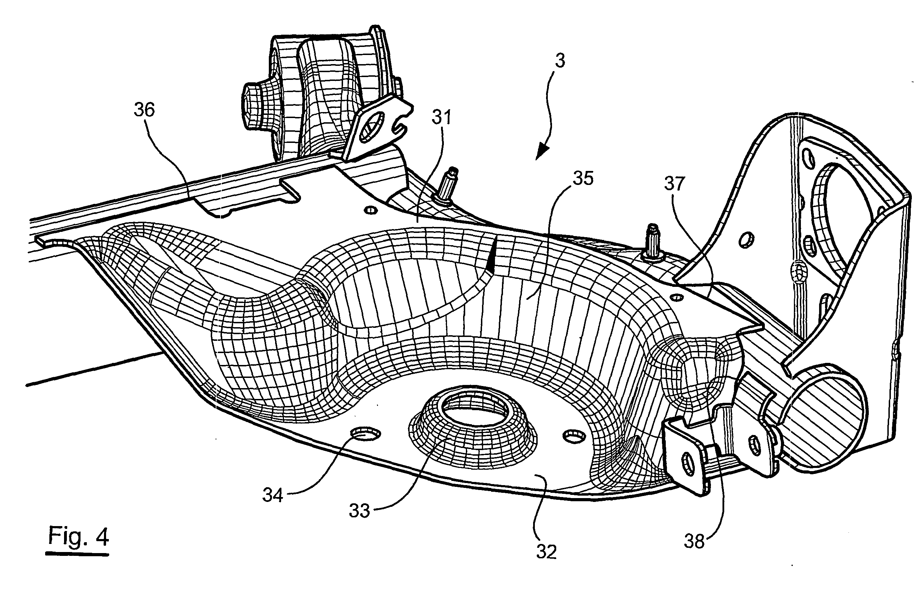

Cette coupelle est illustrée, isolée de l'essieu, par la figure 4.

Telle qu'illustrée par la figure 4, une coupelle selon l'invention est réalisée à partir d'une tôle d'acier, par emboutissage et présente une surface 32 destinée à supporter la base d'un ressort de suspension.

A titre indicatif, le matériau de la tôle est une nuance d'acier telle que HE360D et la tôle présente une épaisseur de 3 mm.

Lors de l'opération d'emboutissage, un téton de centrage 33 est formé, un tel téton permettant de positionner et de maintenir en place le ressort de suspension.

Dans la surface support 32 de la coupelle 3, on prévoit en outre des orifices 34 dont la fonction est d'offrir, de façon connue en soi, un moyen de préhension pour un automate sur les chaînes de montage.

Tel que cela apparaît clairement, la surface support 32 est bordée par un rebord 35 qui relie la surface support 32 à la surface plane 31 formant moyen de rigidification.

Ainsi, la surface support 32 et le rebord 35 forment, par rapport à la surface 31, un logement en creux destiné à recevoir une ou plusieurs des spires extrêmes du ressort de suspension.

Plus précisément, les dimensions du rebord sont telles que le logement en creux de la coupelle 3 est obtenu par un embouti profond, c'est-à-dire un emboutissage à l'issue duquel l'épaisseur du matériau par rapport à son étirement tend vers la limite de déchirement du matériau.

Par ailleurs, la coupelle 3 présente de son côté destiné à être placé en regard de la traverse 1 une zone de soudage 36 (en limite de la surface 31) destinée à porter un cordon de soudure continu assurant la solidarisation de la coupelle à la traverse.

Sur son autre côté (destiné à être placé en regard d'un bras longitudinal), la coupelle 3 présente :
- une patte 37 prévue pour s'étendre parallèlement au bras longitudinal correspondant, et destinée à porter un cordon de soudure solidarisant la coupelle au bras longitudinal ;
- un rebord concave 38 prévue pour épouser une portion de la périphérie du bras longitudinal correspondant et destiné à porter un cordon de soudure solidarisant la coupelle au bras longitudinal.

Tel qu'illustré par la figure 1, la surface 31 formant moyens de rigidification est prévue pour s'étendre dans l'espace défini par la traverse 1, un bras longitudinal 2 et le rebord 35 de la coupelle 3.

Tel que cela apparaît, la surface 31 de chaque coupelle s'étend le long du bras longitudinal 2 correspondant jusqu'à la plaque support de roue 21.

On note que la solidarisation de la coupelle prévoit notamment de :
- souder la zone de soudage 36 de la coupelle sur la traverse 1, de façon que la zone de soudage tende à couvrir la traverse ;
- souder la patte 37 de la coupelle sur le bras longitudinal 2, de façon que la patte tende à couvrir la traverse.

## Revendications

1. Essieu souple pour véhicule automobile comprenant une traverse (1) reliant deux bras longitudinaux (2) chacun solidaire d'au moins une pièce, dite coupelle (3), présentant des moyens de positionnement et/ou de maintien (33) d'au moins un ressort de suspension, ladite traverse (1) étant reliée à chaque bras longitudinal (2) par au moins une coupelle (3) incluant des moyens de rigidification (31) destinés à augmenter la raideur transversale dudit essieu, lesdits moyens de rigidification (31) comprenant au moins une portion essentiellement plane reliant directement ladite traverse (1) et l'un desdits bras longitudinaux (2), chacune desdites coupelles présentant une surface support (32) destinée à supporter un ressort de suspension, ladite surface support (32) étant distincte desdits moyens de rigidification (31) des moyens de rigidification (31) étant constitués par une surface plane délimitée par une portion de ladite traverse (1), par une portion d'un des bras longitudinaux (2) et par un rebord de jonction (35),
**caractérisé en ce que** ladite surface support (32) est bordée par le rebord de jonction (35) reliant la surface support (32) à la surface plane (31) formant moyen de rigidification, et **en ce que** la surface support (32) et le rebord (35) forment, par rapport à la surface (31), un logement en creux destiné à recevoir une extrémité dudit ressort de suspension.

2. Essieu selon la revendication 1, **caractérisé en ce que** ladite ou lesdites portions s'inscrivent essentiellement dans le plan défini par ladite traverse (1) et lesdits bras (2) ou dans un plan parallèle à celui-ci.

3. Essieu selon l'une quelconque des revendications 1 ou 2, **caractérisé en ce que** ladite pièce formant coupelle (3) présente au moins de son côté placé en regard de ladite traverse (1), une zone de soudage (36) dans le plan de ladite portion de rigidification (31), portant un cordon de soudure continu solidarisant ladite pièce à ladite traverse.

4. Essieu selon l'une quelconque des revendications 1 à 3, **caractérisé en ce que** ladite pièce formant coupelle (3) présente de son côté placé en regard d'un bras longitudinal (2), au moins une patte (37) dont le bord libre s'étend sensiblement parallèlement audit bras longitudinal (2) et portant un cordon de soudure solidarisant ladite pièce audit bras (2), ladite coupelle (3) présentant également, de son côté placé en regard d'un bras longitudinal (2) un rebord concave (38) épousant une portion de la périphérie dudit bras (2), ledit rebord concave (38) portant un cordon de soudure solidarisant ladite pièce (3) audit bras (2).

5. Essieu selon l'une quelconque des revendications 1 à 4, **caractérisé en ce que** ladite pièce formant coupelle (3) est réalisée en tôle acier.

6. Essieu selon la revendication 5, **caractérisé en ce que** ladite pièce formant coupelle (3) est réalisée par emboutissage.

7. Essieu selon l'une quelconque des revendications 3 à 6, **caractérisé en ce que** ladite patte (37) est soudée sur la partie la plus haute de la section de chaque bras longitudinal (2), ou au voisinage de celle-ci.

8. Essieu selon l'une quelconque des revendications 1 à 7, **caractérisé en ce que** ladite zone de soudage (36) est soudée sur la partie la plus haute de la section de ladite traverse (1) ou au voisinage de celle-ci.

9. Essieu selon l'une quelconque des revendications 1 à 8, **caractérisé en ce que** ladite portion plane s'étend le long dudit bras longitudinal (2) jusqu'au support de roue (21) ou au voisinage de celui-ci.

10. Essieu selon l'une quelconque des revendications 1 à 9, **caractérisé en ce que** lesdits moyens de positionnement et/ou de maintien (33) de chacune desdites coupelles comprennent un téton de centrage réalisé dans la surface support (32) destinée à supporter ledit ressort de suspension, ledit téton de centrage étant réalisé par emboutissage.

11. Véhicule automobile équipé d'au moins un essieu selon l'une quelconque des revendications 1 à 10.

## Claims

1. Flexible axle for motor vehicle comprising a cross-member (1) which connects two longitudinal arms (2), each joined to at least one part, called a cup (3), having means (33) for positioning and/or holding at least one suspension spring, the said cross-member (1) being connected to each longitudinal arm (2) by at least one cup (3) including stiffening means (31) which are intended to increase the transverse stiffness of the said axle, the said stiffening means (31) comprising at least one essentially plane portion directly connecting the said cross-member (1) and one of the said longitudinal arms (2), each of the said cups having a support surface (32) intended to support a suspension spring, the said support surface (32) being distinct from the said stiffening means (31), stiffening means (31) being formed by a plane surface delimited by a portion (1) of the said cross-member (1), by a portion of one of the longitudinal arms (2) and by a joining shoulder (35),
**characterised in that** the said support surface (32) is bordered by the joining shoulder (35) connecting the support surface (32) to the plane surface (31) forming stiffening means, and **in that** the support surface (32) and the shoulder (35) form, with respect to the surface (31), a hollow receptacle intended to receive one end of the said suspension spring.

2. Axle according to Claim 1, **characterised in that** the said portion or portions lie essentially in the plane defined by the said cross-member (1) and the said arms (2) or in a plane parallel thereto.

3. Axle according to either one of Claims 1 and 2, **characterised in that** the said part forming a cup (3) has, at least on its side facing the said cross-member (1), a welding zone (36) in the plane of the said stiffening portion (31), bearing a continuous weld seam joining the said part to the said cross-member.

4. Axle according to any one of Claims 1 to 3, **characterised in that** the said part forming a cup (3) has, on its side facing a longitudinal arm (2), at least one lug (37), the free edge of which extends substantially parallel to the said longitudinal arm (2) and bearing a weld seam joining the said part to the said arm (2), the said cup (3) also having, on its side facing a longitudinal arm (2), a concave edge (38) conforming in shape to a portion of the periphery of the said arm (2), the said concave edge (38) bearing a weld seam joining the said part (3) to the said arm (2).

5. Axle according to any one of Claims 1 to 4, **characterised in that** the said part forming a cup (3) is made of sheet steel.

6. Axle according to Claim 5, **characterised in that** the said part forming a cup (3) is made by stamping.

7. Axle according to any one of Claims 3 to 6, **characterised in that** the said lug (37) is welded to the highest part of the section of each longitudinal arm (2), or in the vicinity thereof.

8. Axle according to any one of Claims 1 to 7, **characterised in that** the said welding zone (36) is welded to the highest part of the section of the said cross-member (1) or in the vicinity thereof.

9. Axle according to any one of Claims 1 to 8, **characterised in that** the said plane portion extends along the said longitudinal arm (2) as far as the wheel support (21) or in the vicinity thereof.

10. Axle according to any one of Claims 1 to 9, **characterised in that** the said positioning and/or holding means (33) of each of the said cups comprise a centring stud formed in the support surface (32) intended to support the said suspension spring, the said centring stud being made by stamping.

11. Motor vehicle equipped with at least one axle according to any one of Claims 1 to 10.

## Patentansprüche

1. Flexible Achse für Kraftfahrzeuge, die einen Querträger (1) aufweist, der zwei Längsarme (2) verbindet, die jeweils mit wenigstens einem Teil, Schale (3) genannt, fest verbunden sind, welche Mittel (33) zur Positionierung und/oder zum Halten wenigstens einer Tragfeder aufweist, wobei der Querträger (1) mit jedem Längsarm (2) durch wenigstens eine Schale (3) verbunden ist, die Versteifungsmittel (31) aufweist, welche dazu bestimmt sind, die Quersteifigkeit der Achse zu erhöhen, wobei die Versteifungsmittel (31) wenigstens einen im Wesentlichen ebenen Abschnitt aufweisen, der den Querträger (1) direkt mit einem der Längsarme (2) verbindet, wobei jede der Schalen eine Tragoberfläche (32) aufweist, die dazu bestimmt ist, eine Tragfeder zu tragen, wobei die Tragoberfläche (32) von den Versteifungsmitteln (31) verschieden ist, wobei die Versteifungsmittel (31) aus einer ebenen Oberfläche gebildet sind, die durch einen Abschnitt des Querträgers (1), einen Abschnitt eines der Längsarme (2) und einem Verbindungsrand (35) begrenzt ist,
**dadurch gekennzeichnet, dass** die Tragoberfläche (32) von dem Verbindungsrand (35) umrandet ist, welcher die Tragoberfläche (32) mit der flachen Oberfläche (31) verbindet, die das Verstärkungsmittel bildet, und dass die Tragoberfläche (32) und der Rand (35) relativ zu der Oberfläche (31) eine vertiefte Aufnahme bilden, die dazu bestimmt ist, ein Ende der Tragfeder aufzunehmen.

2. Achse nach Anspruch 1, **dadurch gekennzeichnet, dass** der oder die Abschnitte im Wesentlichen in diejenige Ebene fallen, die von dem Querträger (1) und den Armen (2) definiert wird, oder in eine Ebene parallel zu dieser.

3. Achse nach einem der Ansprüche 1 oder 2, **dadurch gekennzeichnet, dass** der Teil, der die Schale (3) bildet, wenigstens auf seiner dem Querträger (1) gegenüber platzierten Seite einen Schweißbereich (36) in der Ebene des Versteifungsabschnitts (31) aufweist, der eine ununterbrochene Schweißnaht trägt, die den Teil mit dem Querträger fest verbindet.

4. Achse nach einem der Ansprüche 1 bis 3, **dadurch gekennzeichnet, dass** das die Schale (3) bildende Teil auf seiner einem Längsarm (2) gegenüber platzierten Seite wenigstens eine Lasche (37) aufweist, deren freier Rand sich im Wesentlichen parallel zu dem Längsarm (2) erstreckt und eine Schweißnaht trägt, die das Teil fest mit dem Arm (2) verbindet, wobei die Schale (3) ebenfalls auf ihrer einem Längsarm (2) gegenüber platzierten Seite einen konkaven Rand (38) aufweist, der sich an einen Umfangsabschnitt des Arms (2) schmiegt, wobei der konkave Rand (38) eine Schweißnaht trägt, die das Teil (3) fest mit dem Arm (2) verbindet.

5. Achse nach einem der Ansprüche 1 bis 4, **dadurch gekennzeichnet, dass** das die Schale (3) bildende Teil aus Stahlblech hergestellt ist.

6. Achse nach Anspruch 5, **dadurch gekennzeichnet, dass** das die Schale (3) bildende Teil durch Tiefziehen hergestellt ist.

7. Achse nach einem der Ansprüche 3 bis 6, **dadurch gekennzeichnet, dass** die Lasche (37) auf den höchsten Bereich des Abschnitts jedes Längsarms (2) oder dazu benachbart geschweißt ist.

8. Achse nach einem der Ansprüche 1 bis 7, **dadurch gekennzeichnet, dass** der Schweißbereich (36) auf den höchsten Teil des Querschnitts der Achse (1) oder dazu benachbart geschweißt ist.

9. Achse nach einem der Ansprüche 1 bis 8, **dadurch gekennzeichnet, dass** sich der ebene Abschnitt entlang des Längsarms (2) bis zu dem Radträger (21) oder in dessen Nachbarschaft erstreckt.

10. Achse nach einem der Ansprüche 1 bis 9, **dadurch gekennzeichnet, dass** die Positionierungs- und/oder Haltemittel (33) jeder der Schalen einen Zentrieransatz aufweisen, der in der Tragoberfläche (32) ausgebildet ist, die dazu bestimmt ist, die Tragfeder zu tragen, wobei der Zentrieransatz mittels Tiefziehen hergestellt ist.

11. Kraftfahrzeug, das mit wenigstens einer Achse nach einem der Ansprüche 1 bis 10 ausgerüstet ist.
